# EUROPÄISCHE PATENTSCHRIFT

(11) **EP 0 829 407 B1**
(45) Veröffentlichungstag und Bekanntmachung des Hinweises auf die Patenterteilung: **17.07.2002**
(21) Anmeldenummer: 97110993.9
(22) Anmeldetag: 02.07.1997
(51) Int. Cl.: B60T 15/14, B60T 8/32, B60T 7/04

(54) **Kolben/Zylinder-Anordnung**
Piston / cylinder arrangement
Dispositif du type piston / cylindre

(30) Priorität: 13.09.1996 DE 19637296
(43) Veröffentlichungstag der Anmeldung: 18.03.1998
(73) Patentinhaber: WABCO GmbH & Co. OHG, 30453 Hannover (DE)
(72) Erfinder: Stumberg, Ingo, 30173 Hannover (DE); Warendorf, Gerhard, 30900 Wedemark (DE); Christoffers, Bernd, 30974 Wennigsen (DE)
(74) Vertreter: Schrödter, Manfred, Dipl.-Ing.

(56) Entgegenhaltungen:
- EP-A- 0 498 918
- EP-A- 0 676 550
- DE-A- 3 319 522
- DE-A- 19 500 137
- DE-U- 29 504 992

## Beschreibung

Die Erfindung betrifft eine Kolben/Zylinder-Anordnung gemäß dem Patentanspruch 1.

Eine ähnliche Kolben/Zylinder-Anordnung ist z. B. aus der DE 37 14 038 A1 bekannt, in der eine mechanischpneumatische Betätigungseinrichtung für ein Bremsventil einer pneumatischen Bremsanlage in einem Fahrzeug beschrieben ist.

Bei pneumatischen Bremsanlagen neuerer Technologie werden die mit den Bremszylindern verbundenen Bremsventile nicht mehr pneumatisch mittels einer mechanisch-pneumatischen Betätigungseinrichtung betätigt, sondern von einer elektronischen Steuereinrichtung durch elektrische Signale angesteuert. Die elektronische Steuereinrichtung erzeugt die Ansteuersignale für die in diesem Fall elektrisch steuerbaren Bremsventile aufgrund der Betätigung des Bremspedals durch den Fahrer, wobei die Steuereinrichtung gegebenenfalls auch weitere Eingangssignale berücksichtigt. Zur Übermittlung der Bremspedalbetätigung und ihrer Umwandlung in ein elektrisches Signal weist eine derartige Bremsanlage einen sogenannten Bremswertgeber auf, der mechanisch mit dem Bremspedal und elektrisch mit der Steuereinrichtung verbunden ist und die Funktion der bekannten Betätigungseinrichtung für das Bremsventils übernimmt.

Ein derartiger Bremswertgeber besteht aus einem mit dem Fahrzeug fest verbundenem, z.B. mit dem Fahrzeugchassis verschraubten Zylinder, in dem ein Kolben axial verschiebbar angeordnet ist. Der Kolben ist über ein Gestänge mechanisch mit dem Bremspedal verbunden und wird bei einer Bremspedalbetätigung innerhalb des Zylinders axial verschoben. Zur Übermittlung der Kolbenbewegung an die elektronische Steuereinrichtung sind zwei miteinander in Wirkverbindung stehende Teile einer Sensoreinrichtung vorhanden, von denen das eine Teil fest am Zylinder angebracht ist und das andere Teil mit dem Kolben in axialer Richtung in dem Zylinder verschoben wird. Hierdurch kann ein von der elektronischen Steuereinrichtung auswertbares Signal, das die Bremspedalbetätigung repräsentiert, erzeugt werden. Neben der Erfassung der Bremspedalbetätigung kann der Kolben zusätzlich zur Betätigung eines mechanisch-pneumatischen Teils des Bremswertgebers dienen, durch den ein zum elektrischen Signal redundantes pneumatisches Signal erzeugt wird.

Bei der durch die Bremspedalbetätigung erzeugten axialen Verschiebung des Kolbens kommt es vor, daß auch ein Drehmoment auf den Kolben übertragen wird, das eine Verdrehung des Kolbens um seine Längsachse bewirkt. Hierbei muß vermieden werden, daß durch die Verdrehung des Kolbens die beiden Teile der Sensoreinrichtung voneinander entfernt werden und dadurch nicht mehr in Wirkverbindung stehen. Dies kann jedoch nicht dadurch erreicht werden, daß die Verdrehung des Zylinders unterdrückt wird, weil dann eine Überbeanspruchung oder Beschädigung der mechanischen Verbindung zwischen dem Kolben und dem Bremspedal auftreten könnte.

Der Erfindung liegt deshalb die Aufgabe zugrunde, eine Kolben/Zylinder-Anordnung anzugeben, bei der ein axial in einem Zylinder verschiebbarer Kolben den auf ihn einwirkenden Drehbewegungen um seine Längsachse folgt und die Teile einer Sensoreinrichtung zur Sensierung der axialen Verschiebung des Kolbens ständig miteinander in Wirkverbindung stehen.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Als Zylinder wird in den folgenden Ausführungen neben einem Kreiszylinder auch jeder Zylinder mit beliebiger anderer, d.h. von der Kreisform abweichender Querschnittskontur verstanden.

Die Erfindung ist grundsätzlich in jeder Kolben/Zylinder-Anordnung vorteilhaft einsetzbar, bei der ein im Zylinder axial verschiebbarer Kolben gegenüber dem Zylinder drehbar sein soll und ein weiteres Teil dieser Anordnung der axialen Bewegung des Kolbens folgen soll, ohne sich gegenüber dem Zylinder zu verdrehen. Ein Vorteil der Erfindung besteht darin, daß zwischen dem Kolben und dem Zylinder ein Führungselement angeordnet ist, das eine Verdrehung des Kolbens gegenüber dem Führungselement einerseits und eine axiale Verschiebung des Führungselementes gegenüber dem Zylinder andererseits erlaubt. Mittels des Führungselementes wird somit die Bewegung des Kolbens gegenüber dem Zylinder in zwei voneinander entkoppelte Komponenten, nämlich eine axiale und eine Dreh-Komponente, aufgeteilt. Hierbei wird das Führungselement durch erste Sicherungsmittel gegen eine axialen Verschiebung am Kolben und zusätzlich durch zweite Sicherungsmittel gegen eine ein vorbestimmtes Maß übersteigende Verdrehung im Zylinder gesichert. Durch Anordnung der in Wirkverbindung stehenden Teile der Sensoreinrichtung, die zur Sensierung der axialen Komponente dient, am Zylinder einerseits und am Führungselement andererseits kann eine Vergrößerung des Abstandes zwischen den Teilen der Sensoreinrichtung durch Verdrehung auf ein vorbestimmtes, zulässiges Maß begrenzt werden.

Ein weiterer Vorteil ist, daß das Führungselement sehr einfach aufgebaut ist und kostengünstig hergestellt werden kann. Neben der Entkopplung der Bewegungskomponenten bewirkt das Führungselement außerdem eine axiale Führung des Kolbens in dem Zylinder nach Art eines Kolbenringes.

Der Kolben kann grundsätzlich jede zur Verdrehung innerhalb des Führungselementes geeignete Querschnittskontur aufweisen. In einer vorteilhaften Weiterbildung der Erfindung ist der Kolben bezüglich seiner Längsachse rotationssymmetrisch ausgebildet. Hierdurch kann der Kolben sehr einfach als Drehteil hergestellt werden. Ein weiterer Vorteil ist, daß der Kolben dann geeignet ist, um einen beliebig großen Drehwinkel um seine Längsachse verdreht zu werden.

In einer vorteilhaften Weiterbildung der Erfindung weist der Kolben als zweites Teil der ersten Sicherungsmittel einen vom Führungselement umgebenen Teilabschnitt auf, der einen geringeren Durchmesser hat als die benachbarten Teilabschnitte des Kolbens. Hierdurch kann das zweite Teil der ersten Sicherungsmittel sehr einfach z. B. in Form einer keilförmigen oder rechteckförmigen radial umlaufenden Nut im Kolben hergestellt werden. Der die Nut umgebende Teil des Führungselementes ist der Kontur der Nut angepaßt und kommt mit dem Kolben dort zur Anlage. Auf diese Weise wird eine axiale Bewegung des Führungselementes gegenüber dem Kolben verhindert.

In einer weiteren vorteilhaften Weiterbildung der Erfindung ist ein als erstes Teil der zweiten Sicherungsmittel dienender Teilsektor der äußeren Querschnittskontur des Führungselementes nicht rotationssymmetrisch ausgebildet. Grundsätzlich kann das Führungselement jede von der Kreisform abweichende äußere Querschnittskontur aufweisen. Die äußere Querschnittskontur kann z. B. quadratisch oder dreieckig sein. In besonders vorteilhafter Weise ist das Führungselement jedoch als im wesentlichen rotationssymmetrisches Teil ausgebildet, das an seiner äußeren Querschnittskontur einen nicht rotationssymmetrischen Teilsektor aufweist. Dieser Teilsektor ist geeignet, mit einem Teil der ebenfalls nicht vollständig rotationssymmetrischen inneren Querschnittskontur des Zylinders zur Anlage zu kommen und hierdurch eine ein vorbestimmtes Maß übersteigende Verdrehung des Führungselementes im Zylinder zu verhindern.

Das zweite Teil der Sensoreinrichtung kann einstückig mit dem Führungselement oder als separates Teil ausgeführt werden. Da das Führungselement und das zweite Teil der Sensoreinrichtung häufig aus unterschiedlichen Materialien, wie z. B. Kunststoff und ein ferromagnetischer Werkstoff, ausgeführt sind, weist in einer vorteilhaften Weiterbildung der Erfindung das Führungselement eine Aufnahmeeinrichtung auf, in der das zweite Teil der Sensoreinrichtung befestigt werden kann. Hierdurch kann das Führungselement unabhängig von dem zweiten Teil der Sensoreinrichtung hergestellt werden, was zu einer Vereinfachung der Herstellung führt.

In einer besonders vorteilhaften Weiterbildung der Erfindung ist das erste Teil der zweiten Sicherungsmittel als Aufnahmeeinrichtung für das zweite Teil der Sensoreinrichtung ausgebildet. Hierdurch kann das Führungselement sehr einfach und kompakt aufgebaut werden.

In einer weiteren vorteilhaften Weiterbildung der Erfindung weist das Führungselement an seiner Außenseite zwei radial umlaufende, linienförmige Anlageflächen auf, die mit der Innenseite des Zylinders zur Anlage kommen. Hierdurch kann die Reibung des Führungselementes am Zylinder verringert werden und ein Verkanten bei der axialen Verschiebung vermieden werden. Durch die Anordnung genau zweier linienförmiger Anlageflächen sind außerdem die Anpreßkräfte zwischen Führungselement und Zylinder statisch bestimmt und somit bei der Konstruktion des Führungselementes für den gewünschten Anwendungsfall analytisch optimierbar.

In einer weiteren vorteilhaften Weiterbildung der Erfindung weist das mit dem Führungselement verbundene erste Teil der zweiten Sicherungsmittel wenigstens eine in axialer Richtung des Zylinders verlaufende linienförmige Anlagefläche auf, die mit dem zweiten Teil der zweiten Sicherungsmittel am Zylinder zur Anlage kommt. Hierdurch kann ebenfalls die Reibung zwischen dem Führungselement und dem Zylinder im Bereich der zweiten Sicherungsmittel verringert werden.

In einer weiteren vorteilhaften Weiterbildung der Erfindung bestehen die zweiten Sicherungsmittel aus einer an der Außenseite des Führungselementes angeordneten, in Längsrichtung des Kolbens verlaufenden Führungsschiene und einer an der Innenseite des Zylinders als Gegenstück zur Führungsschiene angeordneten Führungsleiste. Die Führungsleiste im Zylinder kann dann in besonders einfacher Weise als Längsnut gefräst oder als zusätzliches Teil am Zylinder befestigt werden. Hierdurch kann der Zylinder besonders einfach und unter Verwendung allgemein üblicher Werkzeuge hergestellt werden.

Die Erfindung wird anhand eines Ausführungsbeispiels unter Zuhilfenahme von Zeichnungen näher erläutert.

Es zeigen:
- Fig. 1: eine Schnittdarstellung der erfindungsgemäßen Kolben/Zylinder-Anordnung mit einem Schnitt in Längsrichtung und
- Fig. 2: eine Schnittdarstellung der erfindungsgemäßen Kolben/Zylinder-Anordnung mit einem Schnitt in Querrichtung.

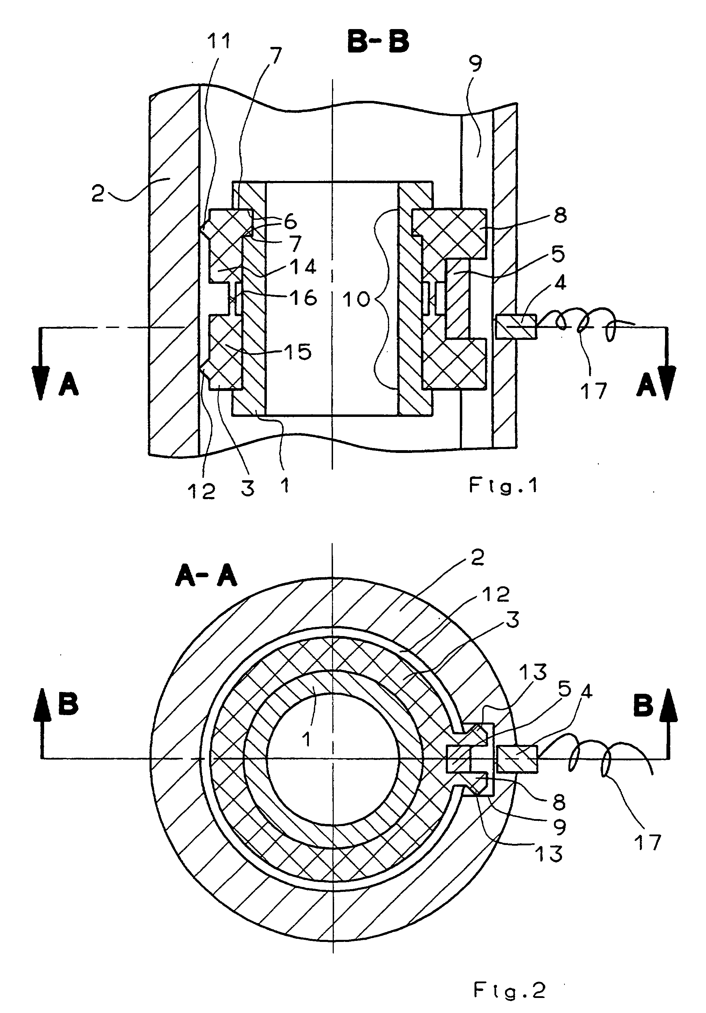

In den Fig. 1 und 2 werden gleiche Bezugszeichen für einander entsprechende Teile verwendet.

Die Darstellung gemäß Fig. 1 zeigt einen Kolben (1), der wenigstens auf einem Teilabschnitt von einem Führungselement (3) umgeben ist. Der Kolben (1) und das Führungselement (3) sind in einem Zylinder (2) angeordnet und können darin axial verschoben werden. Zur axialen Verschiebung ist der Kolben mit einem nicht dargestellten Gestänge z. B. durch Verschraubung verbindbar. Das Gestänge ist dann geeignet, die Betätigungsbewegung eines Bremspedals in einem Kraftfahrzeug auf den Kolben (1) zu übertragen. Hierbei wird neben der axialen Bewegung auch eine Drehbewegung um die Längsachse des Kolbens (1) übertragen, die zu einer Verdrehung des Kolbens gegenüber dem fest im Fahrzeug, z. B. am Fahrzeugchassis, befestigten Zylinder (2) führt.

Das Führungselement (3) ist nach Art eines Kolbenringes ausgebildet und umgreift den Kolben (1) in einem mehrfach abgestuften Teilabschnitt (10). Der mehrfach abgestufte Teilabschnitt des Kolbens (1) weist zwei radial umlaufende Nuten in der Außenkontur auf. Im Bereich der Nuten weist der Kolben (1) einen geringeren Außenradius auf als in den übrigen Teilabschnitten. Die Innenkontur des Führungselementes (3) ist der Außenkontur des Kolbens (1) im Bereich der Nuten angepaßt und kommt mit dem Kolben (1) in diesem Bereich im wesentlichen vollständig zur Anlage. Dadurch, daß auf die als zweites Teil der ersten Sicherungsmittel ausgebildeten Seitenwände (7) der Nuten mit den als erstes Teil der ersten Sicherungsmittel ausgebildeten Anlageflächen (6) des Führungselementes (3) zur Anlage kommt, wird erreicht, daß das Führungselement (3) gegen axiale Verschiebung am Kolben (1) gesichert ist und somit der axialen Bewegung des Kolbens (1) folgt.

Der Kolben (1) weist zur Vermeidung von Fehlern bei der Montage der Kolben/Zylinder-Anordnung wenigstens zwei Nuten mit unterschiedlicher Tiefe auf, an die das Führungselement (3) angepaßt ist.

Das Führungselement (3) wird vorzugsweise aus Kunststoff hergestellt und weist in Längsrichtung eine Trennstelle auf, die es erlaubt, das Führungselement (3) zur Montage am Kolben (1) zu erweitern und bis zum Erreichen der in der Fig. 1 dargestellten endgültigen Montageposition über den Kolben (1) zu schieben. Bei Erreichen der endgültigen Montageposition rastet das Führungselement (3) aufgrund der Federwirkung des Kunststoffmaterials in den Nuten des Kolbens (1) ein.

In einer Aufnahmeeinrichtung des Führungselementes (3) ist ein zweites Teil (5) einer Sensoreinrichtung (4, 5) angeordnet. Das Teil (5) steht mit einem ersten Teil (4) der Sensoreinrichtung (4, 5), das vorzugsweise an der Wandung des Zylinders (2) befestigt ist, in Wirkverbindung. Die Sensoreinrichtung (4, 5) erzeugt ein die axiale Position des Kolbens (1) in dem Zylinder (2) repräsentierendes elektrisches Signal, das über eine Leitung (17) an ein nicht dargestelltes elektronisches Steuergerät übermittelt wird. Als Sensoreinrichtung (4, 5) kann z. B. ein mit einem magnetoresistiven Sensorelement (4) in Verbindung stehender Magnet (5) verwendet werden.

Das Führungselement (3) weist zwei linienförmige Anlageflächen (11, 12) auf, die das Führungselement radial umgeben und am Zylinder (2) anliegen. Hierdurch kann der Kolben (1) in dem Zylinder (2) besonders exakt und reibungsarm geführt werden. Durch die Verwendung genau zweier linienförmiger Anlageflächen ist zudem eine mechanische Kräftebestimmtheit und somit eine zuverlässige Dimensionierung des Führungselementes gegeben.

Das Führungselement (3) weist zwei Teilabschnitte (14, 15) auf, die durch ein flexibles Verbindungselement (16) miteinander verbunden sind. Jede der linienförmigen Anlageflächen (11, 12) ist in einem der Teilabschnitte (14, 15) angeordnet. Das flexible Verbindungselement (16) dient zur Vermeidung von durch die linienförmigen Anlageflächen (11, 12) hervorgerufenen Verspannungen zwischen den Teilabschnitten (14, 15). Das Verbindungselement (16) kann einstückig mit dem Führungselement (3) als ein Teilabschnitt mit verringerter Materialstärke ausgeführt werden. Es ist auch möglich, das Verbindungselement (16) als ein separates Teil aus einem flexiblen Werkstoff, z. B. Gummi, herzustellen.

In der in Fig. 2 dargestellten Ansicht der Kolben/Zylinder-Anordnung sind die zweiten Sicherungsmittel (8, 9) dargestellt. Das erste Teil (8) der zweiten Sicherungsmittel (8, 9) ist als eine in Längsrichtung des Kolbens (1) verlaufende Führungsschiene ausgebildet, die im mittleren Bereich eine Aussparung aufweist, in der das zweite Teil (5) der Sensoreinrichtung (4, 5) angeordnet und befestigt ist. Die Befestigung kann durch Verrasten oder Verkleben erfolgen.

Die Führungsschiene (8) läuft in einer an der Innenseite des Zylinders (2) als Gegenstück zur Führungsschiene (8) angeordneten und als zweites Teil (9) der zweiten Sicherungsmittel dienenden Führungsleiste. Die Führungsleiste (9) kann z. B. als Längsnut in den Zylinder (2) gefräst werden. In einer anderen vorteilhaften Ausführungsform ist die Führungsleiste (9) als ein separates Teil z. B. aus Kunststoff hergestellt, das in einer geeigneten Aussparung in der Wandung des Zylinders (2) angeordnet und von außen an den Zylinder angeschraubt wird. Die dem Innenraum des Zylinders (2) zugewandte Seite der Führungsleiste (9) weist dann eine U-förmige Kontur auf.

Die Führungsschiene (8) weist zwei in axialer Richtung des Zylinders (2) verlaufende linienförmige Anlageflächen (13) auf, die an den einander gegenüberliegenden Anlageflächen der Führungsleiste (9) zur Anlage kommen. Die bei Betätigung des Bremspedals auf den Kolben (1) und durch Reibkräfte zwischen dem Führungselement (3) und dem Kolben (1) auf das Führungselement (3) übertragenen Drehmomente werden von den linienförmigen Anlageflächen (13) über die Führungsleiste (9) auf den Zylinder (2) übertragen. Die Anlageflächen (13) dienen insbesondere durch ihre Ausbildung in Linienform zur Verminderung der Reibkräfte zwischen dem Führungselement (3) und dem Zylinder (2). Es ist auch möglich, die Anlageflächen (13) an der Führungsleiste (9) und nicht an der Führungsschiene (8) anzuordnen.

## Patentansprüche

1. Kolben/Zylinder-Anordnung mit folgenden Merkmalen:
a) ein Kolben (1) ist innerhalb eines Zylinders (2) axial verschiebbar und um seine Längsachse drehbar,
b) ein erstes Teil (4) einer Sensoreinrichtung (4, 5) zur Sensierung der axialen Verschiebung des Kolbens (1) gegenüber dem Zylinder (2) ist am Zylinder (2) angebracht,
c) das erste Teil (4) der Sensoreinrichtung (4, 5) steht mit einem zweiten Teil (5) der Sensoreinrichtung (4, 5), das mit dem Kolben (1) axial verschiebbar ist, in Wirkverbindung,
d) zwischen dem Kolben (1) und dem Zylinder (2) ist ein wenigstens einen Teilabschnitt des Kolbens (1) umgebendes und gegenüber dem Kolben (1) in dessen Umfangsrichtung bewegbares Führungselement (3) angeordnet, das zur axialen Führung des Kolbens (1) dient,
e) das Führungselement (3) weist ein erstes Teil (6) erster Sicherungsmittel (6, 7) auf, das einem am Kolben (1) angeordneten zweiten Teil (7) der ersten Sicherungsmittel (6, 7) als Gegenstück zugeordnet ist,
f) die ersten Sicherungsmittel (6, 7) sichern das Führungselement (3) gegen axiale Verschiebung am Kolben (1),
g) das Führungselement (3) weist ein erstes Teil (8) zweiter Sicherungsmittel (8, 9) auf, das einem am Zylinder (2) angeordneten zweiten Teil (9) der zweiten Sicherungsmittel (8, 9) als Gegenstück zugeordnet ist,
h) die zweiten Sicherungsmittel (8, 9) sichern das Führungselement (3) gegen eine ein vorbestimmtes Maß übersteigende Verdrehung im Zylinder (2),
i) das zweite Teil (5) der Sensoreinrichtung (4, 5) ist mit dem Führungselement (3) verbunden.

2. Kolben/Zylinder-Anordnung nach Patentanspruch 1, **dadurch gekennzeichnet, daß** der Kolben (1) bezüglich seiner Längsachse rotationssymmetrisch ist.

3. Kolben/Zylinder-Anordnung nach Patentanspruch 1 oder 2, **dadurch gekennzeichnet, daß** der Kolben (1) als zweites Teil (7) der ersten Sicherungsmittel (6, 7) einen vom Führungselement (3) umgebenen Teilabschnitt (10) aufweist, der einen geringeren Durchmesser hat als die benachbarten Teilabschnitte des Kolbens (1).

4. Kolben/Zylinder-Anordnung nach wenigstens einem der vorhergehenden Patentansprüche, **dadurch gekennzeichnet, daß** als erstes Teil (6) der ersten Sicherungsmittel (6, 7) wenigstens ein Teil der radialen und/oder axialen inneren Querschnittskontur des Führungselementes (3) der entsprechenden äußeren Querschnittskontur des vom Führungselement (3) umgebenen Teilabschnittes (10) des Kolbens (1) angepaßt ist und mit dem Kolben (1) dort zur Anlage kommt.

5. Kolben/Zylinder-Anordnung nach wenigstens einem der vorhergehenden Patentansprüche, **dadurch gekennzeichnet, daß** als erstes Teil (8) der zweiten Sicherungsmittel (8, 9) wenigstens ein Teilsektor der äußeren Querschnittskontur des Führungselementes (3) nicht rotationssymmetrisch ausgebildet ist.

6. Kolben/Zylinder-Anordnung nach Patentanspruch 5, **dadurch gekennzeichnet, daß** als zweites Teil (9) der zweiten Sicherungsmittel (8, 9) wenigstens ein Teil inneren Querschnittskontur des Zylinders (2) an den nicht rotationssymmetrischen Teilsektor des Führungselementes (3) angepaßt ist und damit zur Anlage kommt.

7. Kolben/Zylinder-Anordnung nach wenigstens einem der vorhergehenden Patentansprüche, **dadurch gekennzeichnet, daß** das Führungselement (3) eine Aufnahmeeinrichtung zur Aufnahme des zweiten Teils (5) der Sensoreinrichtung (4, 5) aufweist.

8. Kolben/Zylinder-Anordnung nach Patentanspruch 7, **dadurch gekennzeichnet, daß** das erste Teil (8) der zweiten Sicherungsmittel (8, 9) als Aufnahmeeinrichtung für das zweite Teil (5) der Sensoreinrichtung (4, 5) ausgebildet ist.

9. Kolben/Zylinder-Anordnung nach wenigstens einem der vorhergehenden Patentansprüche, **dadurch gekennzeichnet, daß** die äußere Querschnittskontur des Führungselementes (3) einen bezüglich der Längsachse des Kolbens (1) rotationssymmetrischen Sektor aufweist.

10. Kolben/Zylinder-Anordnung nach wenigstens einem der vorhergehenden Patentansprüche, **dadurch gekennzeichnet, daß** das Führungsselement (3) an seiner Außenseite zwei radial umlaufende, linienförmige Anlageflächen (11, 12) aufweist, die mit der Innenseite des Zylinders (2) zur Anlage kommen.

11. Kolben/Zylinder-Ancrdnung nach wenigstens einem der vorhergehenden Patentansprüche, **dadurch gekennzeichnet, daß** das erste Teil (8) der zweiten Sicherungsmittel (8, 9) wenigstens eine in axialer Richtung des Zylinders (2) verlaufende linienförmige Anlagefläche (13) aufweist, die mit dem zweiten Teil (9) der zweiten Sicherungsmittel (8, 9) am Zylinder (2) zur Anlage kommt.

12. Kolben/Zylinder-Anordnung nach Patentanspruch 10 oder 11, **gekennzeichnet durch** folgende Merkmale:
a) das Führungselement (3) weist zwei Teilabschnitte (14, 15) auf,
b) in jedem Teilabschnitt (14, 15) ist eine der radial umlaufenden, linienförmigen Anlageflächen (11, 12) angeordnet,
c) die Teilabschnitte (14, 15) sind mit einem flexiblen Verbindungselement (16) verbunden.

13. Kolben/Zylinder-Anordnung nach wenigstens einem der vorhergehenden Patentansprüche, **dadurch gekennzeichnet, daß** die zweiten Sicherungsmittel (8, 9) aus einer an der Außenseite des Führungselementes (3) angeordneten, in Längsrichtung des Kolbens (1) verlaufenden Führungsschiene (8) und einer an der Innenseite des Zylinders (2) als Gegenstück zur Führungsschiene (8) angeordneten Führungsleiste (9) bestehen.

## Claims

1. Piston/cylinder arrangement having the following features:
a) a piston (1) is axially displaceable inside a cylinder (2) and rotatable about its longitudinal axis,
b) a first portion (4) of a sensor device (4, 5) for detecting the axial displacement of the piston (1) relative to the cylinder (2) is arranged on the cylinder (2),
c) the first portion (4) of the sensor device (4, 5) is in operative connection with a second portion (5) of the sensor device (4, 5), which second portion is axially displaceable together with the piston (1),
d) arranged between the piston (1) and the cylinder (2) is a guide element (3) that surrounds at least a part of the piston (1) and that is movable relative to the piston (1) in its circumferential direction, which guide element serves to guide the piston (1) axially,
e) the guide element (3) has a first portion (6) of first securing means (6, 7) associated, as a counter-element, with a second portion (7) of the first securing means (6, 7), which second portion is arranged on the piston (1),
f) the first securing means (6, 7) secure the guide element (3) against axial displacement on the piston (1),
g) the guide element (3) has a first portion (8) of second securing means (8, 9) associated, as a counter-element, with a second portion (9) of the second securing means (8, 9), which second portion is arranged on the cylinder (2),
h) the second securing means (8, 9) secure the guide element (3) against exceeding a predetermined degree of rotation in the cylinder (2),
i) the second portion (5) of the sensor device (4, 5) is connected to the guide element (3).

2. Piston/cylinder arrangement according to patent claim 1, **characterized in that** the piston (1) is rotationally symmetrical with respect to its longitudinal axis.

3. Piston/cylinder arrangement according to patent claim 1 or 2, **characterized in that** the piston (1) has as second portion (7) of the first securing means (6, 7) a part (10) that is surrounded by the guide element (3), which part (10) has a smaller diameter than the adjacent parts of the piston (1).

4. Piston/cylinder arrangement according to at least one of the preceding patent claims, **characterized in that** as first portion (6) of the first securing means (6, 7) at least one portion of the radial and/or axial inner cross-sectional contour of the guide element (3) is matched to the corresponding outer cross-sectional contour of the part (10) of the piston (1) that is surrounded by the guide element (3) and together with the piston (1) there comes into contact therewith.

5. Piston/cylinder arrangement according to at least one of the preceding patent claims, **characterized in that** as first portion (8) of the second securing means (8, 9) at least one segment of the outer cross-sectional contour of the guide element (3) is of non-rotationally symmetrical construction.

6. Piston/cylinder arrangement according to patent claim 5, **characterized in that** as second portion (9) of the second securing means (8, 9) at least one portion of the inner cross-sectional contour of the cylinder (2) is matched to the non-rotationally symmetrical segment of the guide element (3) and accordingly comes into contact therewith.

7. Piston/cylinder arrangement according to at least one of the preceding patent claims, **characterized in that** the guide element (3) has a seat arrangement for receiving the second portion (5) of the sensor device (4, 5).

8. Piston/cylinder arrangement according to patent claim 7, **characterized in that** the first portion (8) of the second securing means (8, 9) is in the form of a seat arrangement for the second portion (5) of the sensor device (4, 5).

9. Piston/cylinder arrangement according to at least one of the preceding patent claims, **characterized in that** the outer cross-sectional contour of the guide element (3) has a segment that is rotationally symmetrical with respect to the longitudinal axis of the piston (1).

10. Piston/cylinder arrangement according to at least one of the preceding patent claims, **characterized in that** the guide element (3) has on its outside two radially extending linear contact faces (11, 12), which come into contact with the inside of the cylinder (2).

11. Piston/cylinder arrangement according to at least one of the preceding patent claims, **characterized in that** the first portion (8) of the second securing means (8, 9) has at least one linear contact face (13) extending in the axial direction of the cylinder (2), which contact face comes into contact with the second portion (9) of the second securing means (8, 9) on the cylinder (2).

12. Piston/cylinder arrangement according to patent claim 10 or 11, **characterized by** the following features:
a) the guide element (3) has two parts (14, 15),
b) in each of the parts (14, 15) there is arranged one of the radially extending linear contact faces (11, 12),
c) the parts (14, 15) are connected by a flexible connecting element (16).

13. Piston/cylinder arrangement according to at least one of the preceding patent claims, **characterized in that** the second securing means (8, 9) consist of a guide rail (8) arranged on the outside of the guide element (3) and extending in the longitudinal direction of the piston (1) and a guide strip (9) that is arranged on the inside of the cylinder (2) as a counter-element to the guide rail (8).

## Revendications

1. Unité à piston-et-cylindre présentant les caractéristiques suivantes :
a) un piston (1) est mobile en translation axiale à l'intérieur d'un cylindre (2) et en rotation autour de son axe longitudinal,
b) une première partie (4) d'un dispositif à détecteur (4, 5) pour détecter la translation axiale du piston (1) par rapport au cylindre (2) est agencée sur le cylindre (2),
c) la première partie (4) du dispositif à détecteur (4, 5) est en liaison d'action avec une deuxième partie (5) du dispositif à détecteur (4, 5), qui est mobile en translation axiale avec le piston (1),
d) entre le piston (1) et le cylindre (2) est agencé un élément de guidage (3) qui entoure au moins un tronçon partiel du piston (1) et qui est mobile par rapport au piston (1) dans sa direction périphérique, et qui sert au guidage axial du piston (1),
e) l'élément de guidage (3) comprend une première partie (6) de premiers moyens de blocage (6, 7) qui est associée à une deuxième partie (7) des premiers moyens de blocage (6, 7), agencée sur le piston (1) à titre d'élément complémentaire,
f) les premiers moyens de blocage (6, 7) bloquent l'élément de guidage (3) à l'encontre d'une translation axiale sur le piston (1),
g) l'élément de guidage (3) comprend une première partie (8) de deuxièmes moyens de blocage (8, 9) qui est associée à une deuxième partie (9) des deuxièmes moyens de blocage (8, 9), agencée sur le cylindre (2) à titre d'élément complémentaire,
h) les deuxièmes moyens de blocage (8, 9) bloquent l'élément de guidage (3) à l'encontre d'une rotation dépassant une valeur prédéterminée dans le cylindre (2),
i) la deuxième partie (5) du dispositif à détecteur (4, 5) est reliée à l'élément de guidage (3).

2. Unité à piston-et-cylindre selon la revendication 1, **caractérisée en ce que** le piston (1) est à symétrie de révolution par rapport à son axe longitudinal.

3. Unité à piston-et-cylindre selon la revendication 1, **caractérisée en ce que** le piston (1) comprend, à titre de deuxième partie (7) des premiers moyens de blocage (6, 7), un tronçon partiel (10) qui est entouré par l'élément de guidage (3) et qui présente un diamètre inférieur à celui des tronçons partiels voisins du piston (1).

4. Unité à piston-et-cylindre selon l'une au moins des revendications précédentes, **caractérisée en ce qu'**à titre de première partie (6) des premiers moyens de blocage (6, 7), au moins une partie du contour de section intérieur radial et/ou axial de l'élément de guidage (3) est adaptée au contour de section extérieur correspondant du tronçon partiel (10), entouré par l'élément de guidage (3), du piston (1), et **en ce qu'**elle vient ici en appui contre le piston (1).

5. Unité à piston-et-cylindre selon l'une au moins des revendications précédentes, **caractérisée en ce qu'**à titre de première partie (8) des deuxièmes moyens de blocage (8, 9), au moins un secteur partiel du contour de section extérieur de l'élément de guidage (3) est réalisé sans symétrie de révolution.

6. Unité à piston-et-cylindre selon la revendication 5, **caractérisée en ce qu'**à titre de deuxième partie (9) des deuxièmes moyens de blocage (8, 9), au moins une partie du contour de section intérieur du cylindre (2) est adaptée au secteur partiel sans symétrie de révolution de l'élément de guidage (3) et vient en appui contre celui-ci.

7. Unité à piston-et-cylindre selon l'une au moins des revendications précédentes, **caractérisée en ce que** l'élément de guidage (3) comprend un dispositif de réception pour recevoir la deuxième partie (5) du dispositif à détecteur (4, 5).

8. Unité à piston-et-cylindre selon la revendication 7, **caractérisée en ce que** la première partie (8) des deuxièmes moyens de blocage (8, 9) est réalisée à titre de dispositif de réception pour la deuxième partie (5) du dispositif à détecteur (4, 5).

9. Unité à piston-et-cylindre selon l'une au moins des revendications précédentes, **caractérisée en ce que** le contour de section extérieur de l'élément de guidage (3) comprend un secteur à symétrie de révolution par rapport à l'axe longitudinal du piston (1).

10. Unité à piston-et-cylindre selon l'une au moins des revendications précédentes, **caractérisée en ce que** l'élément de guidage (3) comprend sur son côté extérieur deux surfaces d'appui radialement périphériques et linéaires (11, 12) qui viennent en appui contre le côté intérieur du cylindre (2).

11. Unité à piston-et-cylindre selon l'une au moins des revendications précédentes, **caractérisée en ce que** la première partie (8) des deuxièmes moyens de blocage (8, 9) comprend au moins une surface d'appui linéaire (13) s'étendant en direction axiale du cylindre (2), laquelle vient en appui contre la deuxième partie (9) des deuxièmes moyens de blocage (8, 9) sur le cylindre (2).

12. Unité à piston-et-cylindre selon la revendication 10, **caractérisée par** les caractéristiques suivantes :
a) l'élément de guidage (3) comprend deux tronçons partiels (14, 15),
b) dans chaque tronçon partiel (14, 15) est agencée l'une des surfaces d'appui linéaires radialement périphériques (11, 12),
c) les tronçons partiels (14, 15) sont reliés à un élément de liaison flexible (16).

13. Unité à piston-et-cylindre selon l'une au moins des revendications précédentes, **caractérisée en ce que** les deuxièmes moyens de blocage (8, 9) sont constitués par un rail de guidage (8) agencé sur le côté extérieur de l'élément de guidage (3) et s'étendant en direction longitudinale du piston (1), et par une baguette de guidage (9) agencée sur le côté intérieur du cylindre (2) à titre d'élément complémentaire au rail de guidage (8).
